# EUROPEAN PATENT SPECIFICATION

(11) **EP 3 478 017 B1**
(45) Date of publication and mention of the grant of the patent: **28.05.2025**
(21) Application number: 17795438.5
(22) Date of filing: 27.04.2017
(51) Int. Cl.: H04W 72/12, H04W 72/04

(54) **RESOURCE REQUEST AND RESOURCE ALLOCATION METHOD, DEVICE, AND STORAGE MEDIUM**
RESSOURCENANFRAGE- UND RESSOURCENZUWEISUNGSVERFAHREN, VORRICHTUNG UND SPEICHERMEDIUM
PROCÉDÉ DE DEMANDE DE RESSOURCES ET D'ATTRIBUTION DE RESSOURCES, DISPOSITIF ET SUPPORT DE STOCKAGE

(30) Priority: 13.05.2016 CN 201610319309
(43) Date of publication of application: 01.05.2019
(73) Proprietor: ZTE Corporation, Shenzhen, Guangdong 518057 (CN)
(72) Inventor: LUO, Wei, Shenzhen, Guangdong 518057 (CN); CHEN, Lin, Shenzhen, Guangdong 518057 (CN); MA, Zijiang, Shenzhen, Guangdong 518057 (CN)
(74) Representative: Vossius & Partner Patentanwälte Rechtsanwälte mbB
(86) International application number: PCT/CN2017/082237
(87) International publication number: WO 2017/193820

(56) References cited:
- EP-A1- 3 101 969
- WO-A1-2015/113398
- CN-A- 102 325 377
- CN-A- 104 811 892
- CN-A- 104 853 441
- US-A1- 2013 343 265
- ZTE: "SPS enhancements for V2X over Uu", vol. RAN WG2, no. Dubrovnik, Croatia; 20160411 - 20160415, 1 April 2016 (2016-04-01), XP051082083, Retrieved from the Internet <URL:http://www.3gpp.org/ftp/tsg_ran/WG2_RL2/TSGR2_93bis/Docs/> [retrieved on 20160401]
- ZTE: "Discussion on V2V SPS resource scheme", 3GPP TSG-RAN WG1 MEETING #84BIS RL-162413, 15 April 2016 (2016-04-15), XP051080186

## Description

### CROSS-REFERENCE TO RELATED APPLICATIONS

This application claims priority to Chinese Patent Application No. 201610319309.6 filed on May 13, 2016.

### TECHNICAL FIELD

The present disclosure relates to the field of communications, and in particular, to a resource requesting and allocation method, device and storage medium.

### BACKGROUND

Vehicle-to-Everything (V2X) Communications refer to provision of vehicle information by means of sensors, vehicle-mounted terminals and electronic tags mounted on vehicles, implementation of Vehicle-to-Vehicle (V2V) Communications, Vehicle-to-Pedestrian (V2P) Communications and Vehicle-to-Infrastructure/Network (V2I/V2N) Communications through various communication technologies, and effective use such as extraction or sharing of information on an information network platform. In this way, the vehicles are managed and controlled effectively and are provided with comprehensive services.

A V2X service is a communication service in which a transmitting or receiving user equipment (UE) using V2V applications participates and which is transmitted through the 3rd Generation Partnership Project (3GPP). A delay requirement of the V2V/V2I/V2P service in the V2X service is 100 ms or even 20 ms. However, the delay requirement may not be satisfied by using the existing uplink cellular network and a PC5 interface-supported resource allocation mode. Considering characteristics of the V2X service, periodic transmission is required in many scenarios. Therefore, semi-persistent scheduling is a suitable scheduling mode. According to the characteristics of the V2X service, the transmission period may be 100ms, 200ms, 500ms or 1s, and the UE may need to change the transmission period at any time according to the change of state of the UE. Even when the UE suddenly speeds up or down or changes its moving direction, a service packet arrives before the next period. However, a base station cannot learn the arrival time and transmission period of each V2X service in the existing semi-persistent scheduling mode. If the base station cannot configure a suitable semi-persistent scheduling (SPS) subframe (the SPS subframe refers to a subframe allocated with SPS resources) for a terminal, a delay caused by SPS scheduling is at least 99 ms and the delay requirement of 100 ms cannot be satisfied considering other transmission delays.

In view of the above problem in the existing art, no effective solution has yet been proposed.

ZTE: "SPS enhancements for V2X over Uu", R2-162398 relates to SPS enhancements for V2X over Uu. Further, it discloses that a UE may report the preferred periodicity and subframe offset to eNB, and the eNB may configure the SPS resources accordingly. Further, when the UE's geographical position, speed, direction changes, the SPS configuration for V2X can be updated based on the new preferred periodicity and subframe offset. The UE can adopt dynamic scheduling to request resource allocation when the SPS resource is not available. WO 2015/113398 A1 relates to a resource allocation method.

### SUMMARY

The invention is specified by the independent claims. Preferred embodiments are defined in the dependent claims.

### BRIEF DESCRIPTION OF DRAWINGS

FIGs. 1A-1D are schematic diagrams of V2X application scenarios in the existing art of the present disclosure;
FIG. 2 is a flowchart of a resource requesting method according to an embodiment of the present disclosure;
FIG. 3 is a flowchart of a resource allocation method according to an embodiment of the present disclosure;
FIG. 4 is a block diagram of a resource requesting device according to an embodiment of the present disclosure;
FIG. 5 is a block diagram of a resource allocation device according to an embodiment of the present disclosure;
FIG. 6 is a flowchart of a first method of applying for resources according to an embodiment of the present disclosure;
FIGS. 7A and 7B are schematic diagrams of two possible MAC CE signaling formats of a buffer status report;
FIG. 8 is a schematic diagram of an MAC CE signaling format of a semi-persistent scheduling resource buffer status report; and
FIG. 9 is a flowchart of a second method of applying for resources according to an embodiment of the present disclosure.

### DETAILED DESCRIPTION

As the number of vehicles increases, how to reduce traffic accidents and how to provide timely rescue and on-site coordination after traffic accidents are problems to be solved in the existing traffic. With the development of communication technologies and electronic technologies, vehicles are provided with vehicle-mounted devices to execute various interactions of information such as accident warning information and traffic condition prompt information. It has become a new way for countries to try to solve road traffic safety problems by using a communications-based collision warning system, which employs advanced wireless communication technologies and a new generation of information processing technologies, to implement real-time information interactions between vehicles and between vehicles and roadside infrastructure, inform each other of the current status (including position, speed, acceleration and traveling path of the vehicle) and the learned road environment information, cooperatively acquire road hazard conditions, and provide various collision warning information in time to prevent road traffic accidents.

In the existing art, the V2X based on Long Term Evolution (LTE) is being discussed in the 3GPP. According to a current definition of the 3GPP, a V2X service is a communication service in which a transmitting or receiving UE using V2V applications participates and which is transmitted through the 3GPP. Based on the opposite party participating in the communication, the V2X service may be further classified into V2V service, V2I service, V2P service and V2N service. The V2P service refers to a communication service between UEs by use of V2P applications. The V2N service refers to a communication service between a UE and a service entity by use of V2N applications through an LTE network entity. The V21 service refers to a interaction service between a UE and a Road Side Unit (RSU) by use of V2I applications. The RSU is an entity that supports the V2I service. The RSU may send the V2I service to a UE that uses a V2I application or receive the V2I service from the UE that uses the V2I application. The RSU may be implemented by a base station (eNB) or a stationary UE. An RSU implemented by a base station is called an eNB type RSU. An RSU implemented by a UE is called a UE type RSU. The V2V service refers to a communication service between UEs by use of V2V applications. The V2V service includes a direct interaction of V2V-related application information between UEs, or an interaction of the V2V-related application information between UEs through infrastructure that supports the V2X service (for example, an RSU or an application server) due to a limited range of the direct V2V communication.

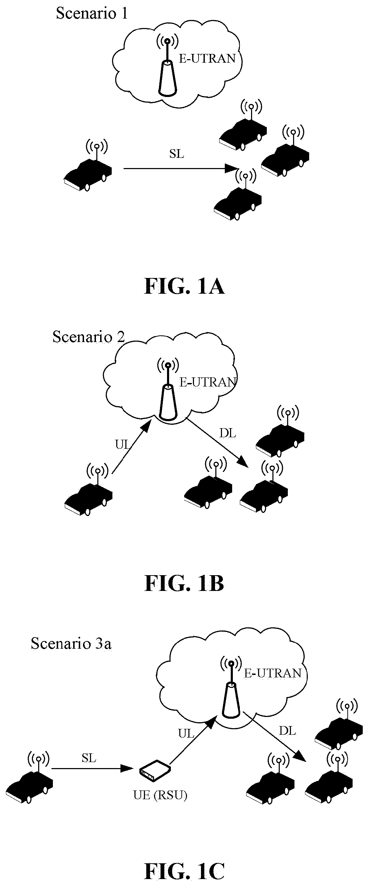

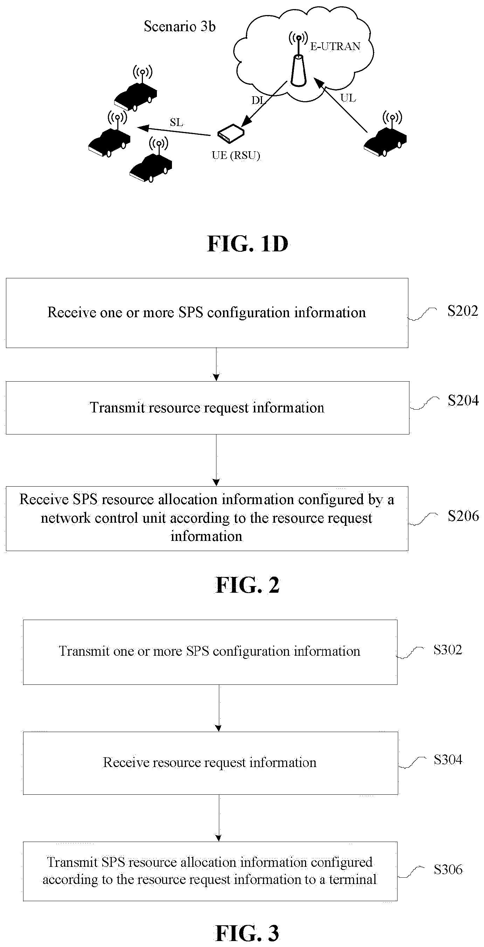

In addition, three V2V scenarios are supported by the 3GPP in the existing art. FIGs. 1A-1D are schematic diagrams of V2X application scenarios in the existing art of the present disclosure. The application scenarios are shown in FIGs. 1A-1D.

A scenario 1 supports the V2V communication merely based on a PC5 interface. A UE transmits a V2X message to multiple UEs in a local area through the PC5 interface.

A scenario 2 supports the V2V communication merely based on a Uu interface. The UE transmits the V2X message to an E-UTRAN through an uplink, and the E-UTRAN broadcasts the V2X message to the plurality of UEs in the local area through a downlink.

A scenario 3 includes a scenario 3a and a scenario 3b and supports the V2V communication based on both the Uu interface and the PC5 interface. The UE transmits the V2X message to other UEs through the PC5 interface. A UE type RSU receives the V2X message through the PC5 interface and transmits the V2X message to the Evolved Universal Terrestrial Radio Access Network (E-UTRAN) through an uplink. The E-UTRAN broadcasts the V2X message received from the UE type RSU to the plurality of UEs in the local area through a downlink. Alternatively, the UE transmits the V2X message to the E-UTRAN through an uplink, the R-UTRAN receives the V2X message through the Uu interface and transmits the V2X message to one or more UE type RSUs, and the UE type RSUs transmits the V2X message received from the E-UTRAN to the plurality of UEs in the local area through the PC5 interface.

A delay requirement of most V2V/V2I/V2P services is 100 ms or even 20 ms. However, the delay requirement may not be satisfied by using the existing uplink cellular network and a PC5 interface-supported resource allocation mode. Considering characteristics of the V2X service, periodic transmission is required in many scenarios. Therefore, semi-persistent scheduling is a suitable scheduling mode. According to the characteristics of the V2X service, the transmission period may be 100ms, 200ms, 500ms or 1s, and the UE may need to change the transmission period at any time according to the change of state of the UE. Even when the UE suddenly speeds up or down or changes its moving direction, a service packet arrives before the next period. However, a base station cannot learn the arrival time and transmission period of each V2X service in the existing semi-persistent scheduling mode. If the base station cannot configure a suitable SPS subframe (the SPS subframe refers to a subframe allocated with SPS resources) for a terminal, for example, if the transmission period is 200ms and the base station configures 100th subframe, 300th subframe, 500th subframe, 700th subframe ... as the SPS subframes, when the V2X service packets are generated in 1st subframe, 201st subframe, 401st subframe ..., the SPS scheduling causes a delay of at least 99 ms, and the delay requirement of 100 ms cannot be satisfied considering other transmission delays.

The present disclosure will be described in detail with reference to the accompanying drawings in conjunction with the embodiments. It is to be noted that if not in collision, the embodiments and features therein in the present application may be combined with each other.

It is to be noted that the terms "first", "second" and the like in the description, claims and above accompanying drawings of the present disclosure are used to distinguish between similar objects and are not necessarily used to describe a particular order or sequence.

### Embodiment 1

A method embodiment provided by the embodiment 1 of the present application may be executed in a mobile terminal, a computer terminal or other similar computing devices. In an example in which the method is executed in a V2X terminal, the V2X terminal 10 may include one or more processors 102 (the processors 102 may include, but are not limited to, a processing device, including a microprocessor such as MCU or a programmable logic device such as FPGA), a memory 104 configured to store data, and a transmission device 106 configured to implement a communication function. It will be understood by those skilled in the art that it is not intended to limit the structure of the electronic device described above. For example, the V2X terminal 10 may further include more or fewer components or has a different configuration.

The memory 104 may be configured to store the software program and modules of application software, such as program instructions/modules corresponding to the resource requesting method in the embodiments of the present disclosure. The processors 102 execute the software program and modules stored in the memory 104 to perform function applications and data processing, that is, to implement the method described above. The memory 104 may include a high-speed random access memory, and may further include a nonvolatile memory, such as one or more magnetic storage devices, flash memories or other nonvolatile solid-state memories. In some examples, the memory 104 may further include memories that are remotely disposed with respect to the processors 102. These remote memories may be connected to the V2X terminal 10 via a network. Examples of such a network include, but are not limited to, the Internet, intranet, local area network, mobile communication network, and combinations thereof.

The transmission device 106 is configured to receive or transmit data via a network. The examples of such networks may include a wireless network provided by a communication provider of the V2X terminal 10. In one example, the transmission device 106 includes a network interface controller (NIC), which may be connected to other network devices via the base station and thus is capable of communicating with the Internet. In one example, the transmission 106 may be a radio frequency (RF) module, which is configured to communicate with the Internet in a wireless way.

This embodiment provides a resource requesting method executed in the V2X terminal described above. FIG. 2 is a flowchart of a resource requesting method according to an embodiment of the present disclosure. As shown in FIG. 2, the method includes the steps described below.

In step S202, one or more SPS configuration information are received.

In step S204, resource request information is transmitted.

In step S206, SPS resource allocation information configured by a network control unit according to the resource request information is received.

In the above steps, the one or more (at least one) SPS configuration information are received, the resource request information is transmitted, and the SPS resource allocation information configured by the network control unit according to the resource request information is received. The SPS resource request information is transmitted according to service requirements to applying for updating information such as an SPS subframe and/or a period for the semi-persistent scheduling of each SPS process, so that the network control unit may timely adjust an activated SPS subframe and adjust an SPS period and a resource block size as needed, and allocate resources according to the SPS resource allocation information, thereby solving the problem in the existing art of an excessively large delay caused by the SPS scheduling and satisfying a low-delay requirement of the service.

As an alternative solution, the step S204 in this embodiment, in which the resource request information is transmitted, may be omitted. That is, the solution in this embodiment may only include the steps described below.

In step S202, one or more SPS configuration information are received.

In step S206, SPS resource allocation information configured by a network control unit is received.

In one embodiment, the step of transmitting the resource request information includes transmitting SPS resource request information to a network control unit according to the SPS configuration information. The SPS resource request information is used for applying for SPS resource allocation information for activating and/or releasing and/or updating each SPS process.

In one embodiment, the above steps may, but are not limited to, be executed by a vehicle-mounted terminal.

The SPS configuration information in this embodiment is used for controlling the timing of transmitting the SPS resource request information according to requirements of the vehicle-mounted terminal or usage of SPS resources in use.

In this embodiment, the SPS configuration information may include the following parameters:
SPS configuration identifier information/index information;
one or more SPS period indication information used for indicating an SPS resource period;
SPS silent period indication information used for indicating an invalid allocation of SPS resources based on SPS configuration in a specified subframe every SPS silent period in multiple SPS subframes in the SPS configuration information; in an example, if an SPS period is 10 ms and the SPS silent period indicated by the SPS silent period indication information is 50 ms, one SPS subframe exists every 10 ms and the SPS subframe is invalid every 50 ms; if a starting SPS subframe exists at 1 ms, the SPS subframes in the SPS configuration are subframes at 1 ms, 11 ms, 21 ms, 31 ms, 41 ms, 61 ms, 71 ms....; in other words, SPS resources based on the SPS configuration allocated to subframes at 51 ms, 101 ms ... are invalid; however, in the case of multiple SPS configuration information, assuming that an Nth subframe is an silent SPS subframe in first SPS configuration and an SPS subframe in second SPS configuration, the Nth subframe is still the SPS subframe in the second SPS configuration and is allocated with resources according to the resource allocation information in the second SPS configuration;
SPS configuration priority indication information used for indicating an SPS configuration priority;
an SPS radio network temporary identifier (SPS-RNTI);
an SPS resource type identifier used for indicating an SPS resource type, the resource type including a Uu interface resource type or a PC5 interface resource type;
a logical channel identifier or a logical channel group identifier used for indicating a logical channel or a logical channel group which is allowed to use SPS resources indicated by the SPS configuration information;
a logical channel identification index or a logical channel group identification index; and
time threshold information T used for indicating a number T of subframes before an SPS subframe, where the transmission of SPS resource request information for requesting to update the SPS subframe corresponding to the SPS configuration information is prohibited within the T subframes.

In one embodiment, one SPS configuration information includes multiple SPS period indication information, and an SPS period indicated by each SPS period indication information corresponds to a semi-persistent radio network temporary identifier.

In one embodiment, the SPS configuration information is carried by RRC signaling, that is, carried in the RRC signaling.

In this embodiment, the SPS resource request information includes one or more of the following parameters:
SPS configuration identifier/index information used for indicating configuration of SPS resources;
an SPS period identifier used for indicating an SPS resource period;
an SPS resource type identifier used for indicating an SPS resource type, the resource type including a Uu interface resource type or a PC5 interface resource type;
   and
a logical channel identifier or a logical channel group identifier used for indicating a logical channel used for applying for the SPS resources.

In one embodiment, the SPS resource request information is carried by one of: RRC signaling or an MAC CE; the RRC signaling and the MAC CE possibly being transmitted signaling. The MAC CE includes one of: a buffer status report or an SPS resource buffer status report.

In one embodiment, the buffer status report includes at least one of: a buffer status report for requesting Uu interface resources or a buffer status report for requesting PC5 interface resources.

In one embodiment, the content of the buffer status report includes at least one of: a first SPS configuration identifier, a first period identifier, a logical channel group identifier or a first buffer size.

In one embodiment, the SPS resource buffer status report includes: a second SPS configuration identifier, a second period identifier, an SPS resource type identifier, a priority identifier or a logical channel group identifier, or a second buffer size.

In one embodiment, when the SPS resource request information includes an SPS configuration identifier and a buffer size, and when it is indicated that the buffer size is 0, deactivation of an SPS process indicated by the SPS configuration identifier is indicated. The SPS configuration identifier includes a first SPS configuration identifier of the buffer status report or a second SPS configuration identifier of the SPS resource buffer status report; and the buffer size includes a first buffer size of the buffer status report or a second buffer size of the SPS resource buffer status report.

In one embodiment, when the SPS resource request information includes an SPS configuration identifier and a deactivation request identifier, the SPS resource request information is used for indicating a request to deactivate an SPS process indicated by the SPS configuration identifier.

In one embodiment, the step of transmitting the resource request information to the network control unit according to the SPS configuration information includes: transmitting the SPS resource request information when a data packet in a logical channel or a logical channel group which is allowed to use SPS resources indicated by SPS configuration identifier information/index information arrives and an interval from arrival of the data packet to a next SPS subframe of a process corresponding to the SPS configuration identifier information/index information is larger than T.

In one embodiment, the SPS resource request information is used for requesting to update an SPS subframe of an SPS process corresponding to an SPS configuration identifier.

In one embodiment, the step of receiving the SPS resource allocation information configured by the network control unit according to the resource request information includes: receiving one resource allocation information once again when multiple SPS processes appear in a same SPS subframe, where the resource allocation information is used in the plurality of SPS processes; or replacing resources allocated by an SPS process of a low priority with resources allocated by an SPS process of a high priority in a subframe when multiple SPS processes appear in the same SPS subframe, where a priority of an SPS process is indicated by SPS configuration priority indication information.

In one embodiment, the logical channel or logical channel group identification index is used for distinguishing between different logical channels or logical channel groups which is allowed to use the SPS resources.

In one embodiment, the SPS resource allocation information includes at least one of: an SPS subframe, an SPS period, an SPS resource block size or an SPS location.

In one embodiment, when multiple SPS processes appear in a same SPS subframe, resources allocated by an SPS process of a low priority are replaced with resources allocated by an SPS process of a high priority in the subframe. The priority of an SPS process is indicated by the SPS configuration priority indication information.

This embodiment further provides a resource allocation method. FIG. 3 is a flowchart of a resource allocation method according to an embodiment of the present disclosure. As shown in FIG. 3, the method includes the steps described below.

In step S302, one or more SPS configuration information are transmitted.

In step S304, resource request information is received.

In step S306, SPS resource allocation information configured according to the resource request information is transmitted to a terminal.

As an alternative solution, the step S304 in this embodiment, in which the resource request information is received, may be omitted. That is, the solution in this embodiment may only include the steps described below.

In step S302, one or more SPS configuration information are transmitted.

In step S306, configured SPS resource allocation information is transmitted to a terminal.

In one embodiment, the step of receiving the resource request information includes receiving SPS resource request information transmitted by the terminal according to the SPS configuration information. The SPS resource request information is used for applying for SPS resource allocation information for activating and/or releasing and/or updating each SPS process.

In one embodiment, the SPS configuration information includes one or more of the following parameters:
SPS configuration identifier information/index information;
one or more SPS period indication information;
SPS silent period indication information used for indicating an invalid allocation of SPS resources based on SPS configuration in a specified subframe every SPS silent period in multiple SPS subframes in the SPS configuration information;
SPS configuration priority indication information used for indicating an SPS configuration priority;
an SPS radio network temporary identifier;
an SPS resource type identifier used for indicating an SPS resource type, the resource type including a Uu interface resource type or a PC5 interface resource type;
a logical channel identifier or a logical channel group identifier used for indicating a logical channel or a logical channel group which is allowed to use SPS resources indicated by the SPS configuration information;
time threshold information T used for indicating a number T of subframes before an SPS subframe, where the transmission of SPS resource request information for requesting to update the SPS subframe corresponding to the SPS configuration information is prohibited within the T subframes; and
a logical channel identification index or a logical channel group identification index.

In one embodiment, one SPS configuration information includes multiple SPS period indication information, and a period indicated by each SPS period indication information corresponds to a semi-persistent radio network temporary identifier.

In one embodiment, the logical channel identification index or the logical channel group identification index is used for distinguishing between different logical channels or logical channel groups which is allowed to use the SPS resources.

In one embodiment, the SPS resource request information includes at least one of: an SPS configuration identifier used for indicating configuration of SPS resources; an SPS period identifier used for indicating an SPS resource period; an SPS resource type identifier used for indicating an SPS resource type, the resource type including a Uu interface resource type or a PC5 interface resource type; SPS activation or deactivation request information; or a logical channel or logical channel group identifier used for indicating a logical channel used for applying for the SPS resources.

In an optional implementation mode of this embodiment, the step of transmitting the SPS resource allocation information configured according to the resource request information includes the steps described below.

In S11, when the SPS resource allocation information includes SPS configuration identifier/index information, it is determined, according to the SPS configuration identifier/index information, to activate or deactivate or update or reactivate an SPS process indicated by the SPS configuration identifier/index information.

In S12, when the SPS resource allocation information includes SPS configuration identifier/index information, it is determined, according to the SPS configuration identifier/index information, to reactivate an SPS process indicated by the SPS configuration identifier/index information and update an SPS subframe and/or an SPS resource block size. S11 and S12 are parallel steps.

In S13, the updated SPS subframe and/or SPS resource block are transmitted to the terminal.

In another optional implementation mode of this embodiment, the step of transmitting the SPS resource allocation information configured according to the resource request information includes the steps described below.

In S21, when the SPS resource allocation information includes SPS configuration identifier/index information and SPS period indication information, an SPS period indicated by the SPS configuration identifier/index information is determined according to the SPS period indication information, and the SPS period is updated.

In S22, an SPS process is reactivated using an SPS-RNTI corresponding to the updated SPS period.

In S23, the SPS resource allocation information is transmitted to the terminal using the SPS-RNTI corresponding to the updated SPS period.

In one embodiment, the step of transmitting the SPS resource allocation information configured according to the resource request information to the terminal includes: transmitting scheduling resources reallocated in a subframe to the terminal when multiple SPS processes appear in the same subframe; or replacing resources allocated by an SPS process of a low priority with resources allocated by an SPS process of a high priority in a subframe when multiple SPS processes appear in the same SPS subframe, where a priority of an SPS process is indicated by SPS configuration priority indication information.

In one embodiment, the step of receiving the SPS resource request information transmitted by the terminal according to the SPS configuration information includes: receiving the SPS resource request information transmitted by the terminal when a data packet in a logical channel or a logical channel group which is allowed to use SPS resources indicated by SPS configuration identifier information/index information arrives in the terminal and an interval from arrival of the data packet to a next SPS subframe of a process corresponding to the SPS configuration identifier information/index information is larger than T.

From the description of the embodiments described above, it will be apparent to those skilled in the art that the method of any embodiment described above may be implemented by software in combination with a necessary general-purpose hardware platform, or may of course be implemented by hardware; but in many cases, the former is a preferred implementation mode. Based on this understanding, the technical solution provided by the present disclosure substantially, or the part contributing to the existing art, may be embodied in the form of a software product. The software product is stored in a storage medium (such as a magnetic disk or an optical disk) and includes several instructions for enabling a terminal device (which may be a mobile phone, a computer, a server or a network device) to execute the method of any embodiment of the present disclosure.

### Embodiment 2

This embodiment provides a resource requesting device for implementing the above-mentioned embodiments and preferred implementation modes. What has been described will not be repeated. As used below, a term "module" may be software, hardware or a combination thereof capable of implementing predetermined functions. The device in the embodiments described below is preferably implemented by software, but implementation by hardware or by a combination of software and hardware is also possible and conceived.

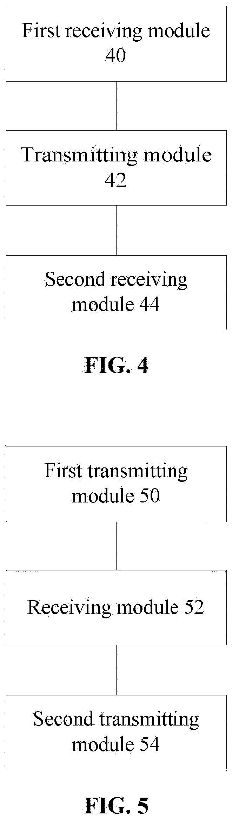

FIG. 4 is a block diagram of a resource requesting device according to an embodiment of the present disclosure. The device may be disposed in each terminal of a V2X system. As shown in FIG. 4, the device includes a first receiving module 40, a transmitting module 42 and a second receiving module 44.

The first receiving module 40 is configured to receive one or more SPS configuration information.

The transmitting module 42 is configured to transmit resource request information.

The second receiving module 44 is configured to receive SPS resource allocation information configured by a network control unit according to the resource request information.

In one embodiment, the transmitting module 42 includes a transmitting unit, which is configured to transmit SPS resource request information to the network control unit according to the SPS configuration information. The SPS resource request information is used for applying for SPS resource allocation information for activating and/or releasing and/or updating each SPS process.

FIG. 5 is a block diagram of a resource allocation device according to an embodiment of the present disclosure. The device may be disposed in a network-side network element such as a base station. As shown in FIG. 5, the device includes a first transmitting module 50, a receiving module 52 and a second transmitting module 54.

The first transmitting module 50 is configured to transmit one or more SPS configuration information.

The receiving module 52 is configured to receive resource request information.

The second transmitting module 54 is configured to transmit SPS resource allocation information configured according to the resource request information to a terminal.

In one embodiment, the receiving module 52 includes a receiving unit, which is configured to receive SPS resource request information transmitted by the terminal according to the SPS configuration information. The SPS resource request information is used for applying for SPS resource allocation information for activating and/or releasing and/or updating each SPS process.

The various modules described above may be implemented by software or hardware. Implementation by hardware may, but may not necessarily, be performed by the following modes: the various modules described above are located in a same processor or their respective processors.

### Embodiment 3

This embodiment is used for describing the present disclosure in detail and this embodiment includes a plurality of embodiments described below.

### Embodiment one

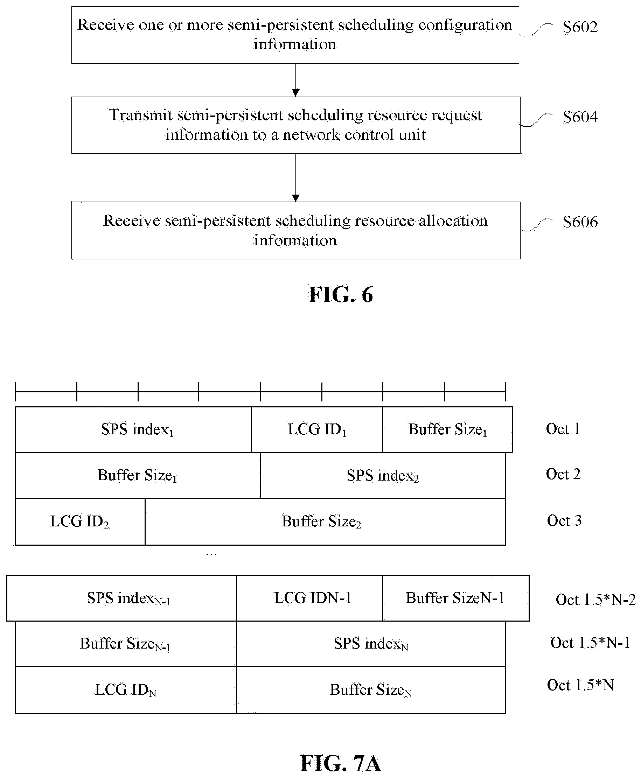

FIG. 6 is a flowchart of a first method of applying for resources according to an embodiment of the present disclosure. As shown in FIG. 6, this embodiment provides a method of applying for resources. The method includes the steps described below.

In step S602, one or more semi-persistent scheduling configuration information are received.

In step S604, semi-persistent scheduling resource request information is transmitted to a network control unit.

In step S606, semi-persistent scheduling resource allocation information is received.

The resource application method in this embodiment may be executed by various user equipments, for example, various vehicle-mounted devices.

In this embodiment, the network control unit may include a base station, an RSU, a relay, or a terminal capable of performing resource allocation.

In the step S602, the network control unit may determine whether to configure one or more semi-persistent scheduling configuration information for the user equipments according to their respective bearer setup requests initiated by the user equipments, or capability indication or V2X service type interest indication information.

In this embodiment, the semi-persistent scheduling configuration information includes at least one of the following information:
semi-persistent scheduling configuration identification information/index information;
semi-persistent scheduling period indication information;
a semi-persistent scheduling radio network temporary identifier (SPS-RNTI); and
a logical channel or logical channel group identifier used for indicating a logical channel or a logical channel group which is allowed to use semi-persistent scheduling resources indicated by the semi-persistent scheduling configuration information.

In step S604, the user equipment determines whether a semi-persistent scheduling resource request needs to be initiated according to an indication on an application layer or according to an arrival law of data packets. The semi-persistent scheduling resource request is used for activating new semi-persistent scheduling configuration or updating the activated semi-persistent scheduling configuration.

The semi-persistent scheduling resource request information includes at least one of the following information:
a semi-persistent scheduling configuration identifier used for indicating the configuration of semi-persistent scheduling resources;
a semi-persistent scheduling resource type identifier used for indicating a semi-persistent scheduling resource type, the resource type including a Uu interface resource type or a PC5 interface resource type; and
semi-persistent scheduling activation or deactivation request information.

In one embodiment, the semi-persistent scheduling resource request information is carried by RRC signaling.

Alternatively, the semi-persistent scheduling resource request information is carried by an MAC CE.

In one embodiment, the MAC CE includes a buffer status report or a semi-persistent scheduling resource buffer status report.

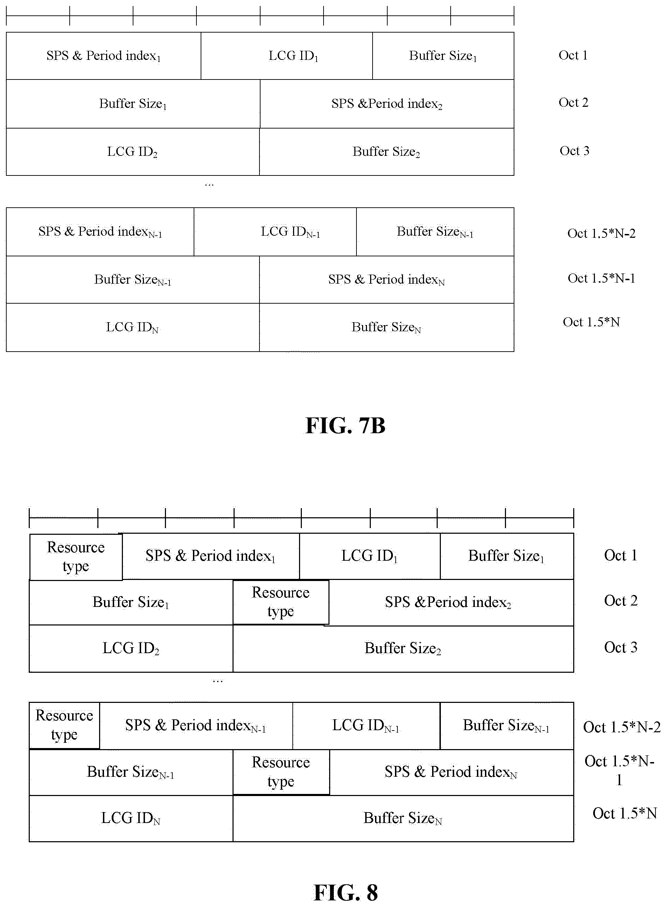

FIG. 7 (7A and 7B) shows schematic diagrams of two possible MAC CE signaling formats of the buffer status report. In FIGs. 7A and 7B, type represents a resource type indication; SPS&period index represents a semi-persistent scheduling configuration identifier and period identifier; LCG ID represents a logical channel group identifier; Buffer size represents a buffer size; Oct represents bytes in a subframe, where N is an even number.

The buffer status report includes at least one of: a buffer status report for requesting Uu interface resources or a buffer status report for requesting PC5 interface resources.

The content of the buffer status report includes a semi-persistent scheduling configuration identifier, a period identifier, a logical channel group identifier, or a buffer size.

FIG. 8 is a schematic diagram of an MAC CE signaling format of a semi-persistent scheduling resource buffer status report. As shown in FIG. 8, the semi-persistent scheduling resource buffer status report includes: a semi-persistent scheduling configuration identifier, a period identifier, a semi-persistent scheduling resource type identifier, a priority identifier or a logical channel group identifier, or a buffer size.

In one embodiment, when the semi-persistent scheduling resource request information includes the semi-persistent scheduling configuration identifier and the buffer size. The buffer size of 0 indicates deactivation of a semi-persistent scheduling process indicated by the semi-persistent scheduling configuration identifier.

In the step S606, the step of receiving the semi-persistent scheduling resource allocation information includes adjusting SPS configuration according to the received semi-persistent scheduling resource allocation information. The adjustment of SPS configuration includes: activating a new SPS process, deactivating an SPS process, updating an SPS subframe of the activated SPS process, updating the SFNstart time and the subframestart time, updating a period of the activated SPS process, and updating a resource block size of the activated SPS process. SFN represents a system-frame number.

In addition, when two or more SPS processes appear in a same subframe, it is agreed that the subframe combines the two or more SPS processes into one process and receives a unified resource allocation. After the allocated resources are received, it is further determined according to their priorities which data packets are scheduled.

In one embodiment, when multiple SPS processes appear in the same SPS subframe, resources allocated by an SPS process of a low priority are replaced with resources allocated by an SPS process of a high priority in the subframe. The priority of an SPS process is indicated by SPS configuration priority indication information.

### Embodiment two

The difference between this embodiment and embodiment one is that each semi-persistent scheduling configuration information corresponds to multiple possible periods, and a network side allocates different SPS-RNTIs for each possible period. Therefore, each semi-persistent scheduling configuration carries one semi-persistent scheduling configuration identifier information and may carry multiple SPS-RNTI information. Different SPS-RNTIs correspond to different periods. When the SPS process corresponding to the semi-persistent scheduling configuration identifier is activated, only one period may be activated at the same time. For example, one semi-persistent scheduling configuration corresponds to an identifier index1 and five periods of 100 ms, 200 ms, 300 ms, 500 ms and 1s. Different period corresponds to different SPS-RNTIs, which are SPS-RNTI-1, SPS-RNTI-2, SPS-RNTI-3, SPS-RNTI-4 and SPS-RNTI-5, respectively. Initially, a UE applies for activating the period of 100 ms, and the semi-persistent scheduling resource request information carries indication information corresponding to the identifier index1 and the period of 100 ms. In this case, the network side uses SPS-RNTI-1 for activating the SPS subframe. Thereafter, as the state of the UE changes, the UE applies for updating the period of the SPS process to 200 ms, and the semi-persistent scheduling resource request information transmitted by the UE carries indication information corresponding to the identifier index1 and the period of 200 ms. After the network side confirms, the network side uses the SPS-RNTI-2 for activating the SPS subframe; the UE receives activation indication, updates the period of the process, and determines whether to update the activated SPS subframe according to the received subframe of an SPS activation instruction.

The difference between this embodiment and embodiment one is described as follows.

In step S602, the semi-persistent scheduling configuration information further includes multiple period indication information. In one embodiment, a period indicated by each period indication information corresponds to a semi-persistent radio network temporary identifier.

In step S604, the semi-persistent scheduling resource request information further includes a semi-persistent scheduling period identifier used for indicating a period of semi-persistent scheduling resources.

### Embodiment three

The difference between this embodiment and embodiment three is that the semi-persistent scheduling resource request information reported by a UE is further defined. When a data packet in a logical channel or a logical channel group which is allowed to use semi-persistent scheduling resources indicated by some semi-persistent scheduling configuration identifier arrives and an interval from arrival of the data packet to a next SPS subframe of a process corresponding to the semi-persistent scheduling configuration identifier is larger than T, the semi-persistent scheduling resource request information may be transmitted for requesting to update an SPS subframe of the SPS process corresponding to the semi-persistent scheduling configuration identifier.

The difference between this embodiment and embodiment one is described as follows.

In step S602, the semi-persistent scheduling configuration information further includes time threshold information T used for indicating a number T of subframes before any SPS subframe corresponding to the SPS process, where the transmission of semi-persistent scheduling resource request information for requesting to update the SPS subframe corresponding to the semi-persistent scheduling configuration is prohibited within the T subframes.

In step S604, the user equipment needs to determine whether the above-mentioned condition is satisfied before it determines to transmit the semi-persistent scheduling resource request information for requesting to update the SPS subframe corresponding to the semi-persistent scheduling configuration.

### Embodiment four

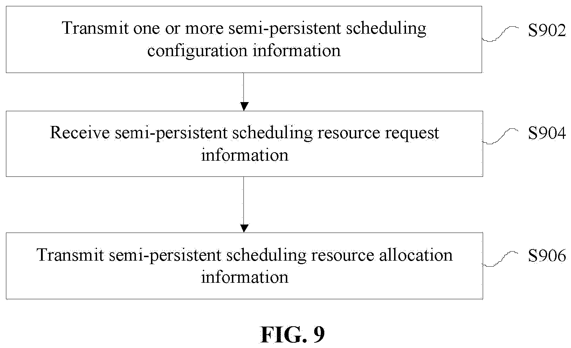

FIG. 9 is a flowchart of a second method of applying for resources according to an embodiment of the present disclosure. As shown in FIG. 9, this embodiment provides a resource allocation method. The method includes the steps described below.

In step S902, one or more semi-persistent scheduling configuration information are transmitted.

In step S904, semi-persistent scheduling resource request information is received.

In step S906, semi-persistent scheduling resource allocation information is transmitted.

The method of applying for resources in this embodiment may be executed by a network control unit, which is for example a base station, an RSU, a relay, or a terminal capable of performing resource allocation.

In the step S902, the network control unit may determine whether to configure one or more semi-persistent scheduling configuration information for the user equipments according to their respective bearer setup requests initiated by the user equipments, capability indication or V2X service type interest indication information. The semi-persistent scheduling configuration information includes at least one of the following information:
semi-persistent scheduling configuration identifier information/index information;
one or more semi-persistent scheduling period indication information;
a semi-persistent radio network temporary identifier;
a semi-persistent scheduling resource type identifier used for indicating a semi-persistent scheduling resource type, the resource type including a Uu interface resource type or a PC5 interface resource type;
a logical channel or logical channel group identifier used for indicating a logical channel or a logical channel group which is allowed to use semi-persistent scheduling resources indicated by the semi-persistent scheduling configuration information; and
time threshold information T used for indicating a number T of subframes before an SPS subframe, wherein the transmission of semi-persistent scheduling resource request information for requesting to update the SPS subframe corresponding to the semi-persistent scheduling configuration is prohibited within the T subframes.

In one embodiment, one semi-persistent scheduling configuration includes multiple periods and each period corresponds to a semi-persistent radio network temporary identifier.

In the step S904, the semi-persistent scheduling resource request information includes at least one of the following information:
a semi-persistent scheduling configuration identifier used for indicating the configuration of semi-persistent scheduling resources;
a semi-persistent scheduling period identifier used for a period of semi-persistent scheduling resources; and
a semi-persistent scheduling resource type identifier used for indicating a semi-persistent scheduling resource type, the resource type including a Uu interface resource type or a PC5 interface resource type.

In step S906, the step of transmitting the semi-persistent scheduling resource allocation information includes the steps described below.

In the case where the semi-persistent scheduling resource allocation information includes a semi-persistent scheduling configuration identifier, it is determined, according to the semi-persistent scheduling configuration identifier, to activate or deactivate a semi-persistent scheduling process indicated by the semi-persistent scheduling configuration identifier; it is determined, according to the semi-persistent scheduling configuration identifier, to reactivate the semi-persistent scheduling process indicated by the semi-persistent scheduling configuration identifier and update an SPS subframe and/or an SPS resource black size.

In the case where the semi-persistent scheduling resource allocation information includes a semi-persistent scheduling configuration identifier and the semi-persistent scheduling period indication information, a semi-persistent scheduling period indicated by the semi-persistent scheduling configuration identifier is determined according to the semi-persistent scheduling period indication information, and the SPS period is updated. The SPS process is reactivated using an SPS-RNTI corresponding to the period of the SPS process indicated by the semi-persistent scheduling configuration identifier.

According to this embodiment, the network control unit configures one or more semi-persistent scheduling configuration information; and the UE transmits the semi-persistent scheduling resource request information according to service requirements to apply for updating information such as the SPS subframe and/or the period for the semi-persistent scheduling of each semi-persistent scheduling process. In this way, the network control unit may timely adjust the activated SPS subframe and adjust the SPS period and the resource block size as needed. Resources allocated in this way can satisfy the low-delay requirement of the service.

### Embodiment 4

An embodiment of the present disclosure further provides a storage medium. In this embodiment, the storage medium may be configured to store program codes for executing the steps described below.

In step S1, one or more SPS configuration information are received.

In step S2, resource request information is transmitted.

In step S3, SPS resource allocation information configured by a network control unit according to the resource request information is received.

Various modules in the embodiments of the present disclosure can be implemented by a processor or can also be implemented by a specific logic circuit. In practical applications, the processor can be a central processing unit (CPU), a microprocessor unit (MPU) or a field programmable gate array (FPGA).

In this embodiment, the storage medium may include, but is not limited to, a flash disk, a read-only memory (ROM), a random access memory (RAM), a mobile hard disk, a magnetic disk, an optical disk or another medium capable of storing program codes.

In this embodiment, the processor executes the step of receiving the one or more SPS configuration information according to the program codes stored in the storage medium.

In this embodiment, a processor executes the step of transmitting the resource request information according to the program codes stored in the storage medium.

In this embodiment, a processor executes the step of receiving the SPS resource allocation information configured by the network control unit according to the resource request information according to the program codes stored in the storage medium.

For specific examples in this embodiment, reference may be made to the examples described in the above embodiments and optional implementation modes, and the specific examples will not be repeated in this embodiment.

Apparently, those skilled in the art should understand that the above-mentioned modules or steps of the present disclosure may be implemented by a general-purpose computing device, the modules or steps may be integrated on a single computing device or distributed on a network formed by multiple computing devices; and the modules or steps may be implemented by program codes executable by the computing devices, so that the modules or steps may be stored in a storage device and executable by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present disclosure is not limited to any specific combination of hardware and software.

Accordingly, an embodiment of the present disclosure further provides a computer-readable storage medium. The computer-readable storage medium stores a computer program, which is configured to execute the above resource requesting method provided by the present disclosure.

An embodiment of the present disclosure further provides a computer-readable storage medium. The computer-readable storage medium stores a computer program, which is configured to execute the above resource allocation method provided by the present disclosure.

The above are only preferred embodiments of the present disclosure and are not intended to limit the present disclosure, and for those skilled in the art, the present disclosure may have various modifications and variations.

### Industrial Applicability

According to the embodiments of the present disclosure, the one or more SPS configuration information are received, the resource request information is transmitted, and the SPS resource allocation information configured by the network control unit according to the resource request information is received. The SPS resource request information is transmitted according to service requirements to apply for updating information such as an SPS subframe and/or a period for the semi-persistent scheduling of each SPS process, so that the network control unit may timely adjust an activated SPS subframe and adjust an SPS period and a resource block size as needed, and allocate resources according to the SPS resource allocation information, thereby solving the problem in the existing art of an excessively large delay caused by the SPS scheduling and satisfying a low-delay requirement of the service.

## Claims

1. A resource requesting method, comprising:
receiving, by a terminal, information about at least one semi-persistent scheduling, SPS, configuration from a base station;
transmitting, by the terminal, a resource request to the base station according to a transmission related to Vehicle-to-Everything, V2X, wherein the resource request includes a first identifier indicating an SPS period and a second identifier indicating a logical channel configured for SPS that is allowed to use SPS resources indicated by the information about at least one SPS configuration; and
receiving, by the terminal, SPS resource allocation information from the base station in response to the resource request, wherein the SPS resource allocation information includes an indicator_indicating an activation or a release of one of the at least one SPS configuration.

2. The method of claim 1, wherein the information about the at least one SPS configuration comprises:
an index identifying an SPS configuration;
a first indicator indicating the SPS period; and
a second indicator indicating an SPS resource type, wherein the resource type includes a Uu interface resource type or a PC5 interface resource type.

3. The method of claim 1 or 2, wherein the information about the at least one SPS configuration is carried by a radio resource control, RRC, signaling message.

4. A resource allocation method, comprising:
transmitting, by a base station, information about at least one semi-persistent scheduling, SPS, configuration to a terminal;
receiving, by the base station, a resource request from the terminal according to a transmission related to Vehicle-to-Everything, V2X, wherein the resource request includes a first identifier indicating an SPS period and a second identifier indicating a logical channel configured for SPS that is allowed to use SPS resources indicated by the information about at least one SPS configuration; and
transmitting, by the base station, SPS resource allocation information to the terminal in response to the resource request, wherein the SPS resource allocation information includes an indicator indicating an activation or a release of one of the at least one SPS configuration.

5. The method of claim 4, wherein the information about the at least one SPS configuration comprises:
an index identifying an SPS configuration;
a first indicator indicating the SPS period; and
a second indicator indicating a SPS resource type, wherein the resource type includes a Uu interface resource type or a PC5 interface resource type.

6. The method of claim 4 or 5, wherein the information about the at least one SPS configuration is carried by a radio resource control, RRC, signaling message.

7. A computer storage medium having computer-executable instructions stored thereon, the instructions upon execution by a processor causing the processor to implement a method that comprises:
receiving, by a terminal, information about at least one semi-persistent scheduling, SPS, configuration from a base station;
transmitting, by the terminal, a resource request to the base station according to a transmission related to Vehicle-to-Everything, V2X, wherein the resource request includes a first identifier indicating an SPS period and a second identifier indicating a logical channel configured for SPS that is allowed to use SPS resources indicated by the information about at least one SPS configuration; and
receiving, by the terminal, SPS resource allocation information from the base station in response to the resource request, wherein the SPS resource allocation information includes an indicator indicating an activation or a release of one of the at least one SPS configuration.

8. The computer storage medium of claim 7, wherein the information about the at least one SPS configuration comprises:
an index identifying an SPS configuration;
a first indicator indicating the SPS period; and
a second indicator indicating an SPS resource type, wherein the resource type includes a Uu interface resource type or a PC5 interface resource type.

9. The computer storage medium of claim 7 or 8, the information about the at least one SPS configuration is carried by a radio resource control, RRC, signaling message.

10. A wireless communication device, comprising:
a processor, and
a memory including executable instructions, the instructions upon execution by the processor causing the processor to:
receive information about at least one semi-persistent scheduling, SPS, configuration from a base station;
transmit a resource request to the base station according to a transmission related to Vehicle-to-Everything, V2X, wherein the resource request includes a first identifier indicating an SPS period and a second identifier indicating a logical channel configured for SPS that is allowed to use SPS resources indicated by the information about at least one SPS configuration; and
receive SPS resource allocation information from the base station in response to the resource request, wherein the SPS resource allocation information includes an indicator indicating an activation or a release of one of the at least one SPS configuration.

11. The device of claim 10, wherein the information about the at least one SPS configuration comprises:
an index identifying an SPS configuration;
a first indicator indicating the SPS period; and
a second indicator indicating an SPS resource type, wherein the resource type includes a Uu interface resource type or a PC5 interface resource type.

12. The device of claim 10 or 11, wherein the information about the at least one SPS configuration is carried by a radio resource control, RRC, signaling message.

13. A wireless communication device, comprising:
a processor, and
a memory including executable instructions, the instructions upon execution by the processor causing the processor to:
transmit information about at least one semi-persistent scheduling, SPS, configuration to a terminal;
receive a resource request from the terminal according to a transmission related to Vehicle-to-Everything, V2X, wherein the resource request includes a first identifier indicating an SPS period and a second identifier indicating a logical channel configured for SPS that is allowed to use SPS resources indicated by the information about at least one SPS configuration; and
transmit SPS resource allocation information to the terminal in response to the resource request, wherein the SPS resource allocation information includes an indicator indicating an activation or a release of one of the at least one SPS configuration.

14. The device of claim 13, wherein the information about the at least one SPS configuration comprises:
an index identifying an SPS configuration;
a first indicator indicating the SPS period; and
a second indicator indicating an SPS resource type, wherein the resource type includes a Uu interface resource type or a PC5 interface resource type.

15. The device of claim 13 or 14, wherein the information about the at least one SPS configuration is carried by a radio resource control, RRC, signaling message.

## Patentansprüche

1. Ressourcenanforderungsverfahren, das aufweist:
Empfangen, durch ein Endgerät, von Informationen über mindestens eine semi-persistente Planungs-, SPS, Konfiguration von einer Basisstation;
Übertragen, durch das Endgerät, einer Ressourcenanforderung an die Basisstation gemäß einer Übertragung, die sich auf Vehicle-to-Everything, V2X, bezieht, wobei die Ressourcenanforderung ein erstes Kennzeichen, das eine SPS-Periode anzeigt, und ein zweites Kennzeichen enthält, das einen für SPS konfigurierten logischen Kanal anzeigt, der SPS-Ressourcen verwenden darf, die durch die Informationen über mindestens eine SPS-Konfiguration angezeigt werden; und
Empfangen, durch das Endgerät, von SPS-Ressourcenzuweisungsinformationen von der Basisstation als Reaktion auf die Ressourcenanforderung, wobei die SPS-Ressourcenzuweisungsinformationen ein Kennzeichen enthalten, das eine Aktivierung oder eine Freigabe einer der mindestens einen SPS-Konfiguration anzeigt.

2. Verfahren nach Anspruch 1, wobei die Informationen über die mindestens eine SPS-Konfiguration aufweisen:
einen Index, der eine SPS-Konfiguration identifiziert;
ein erstes Kennzeichen, das die SPS-Periode anzeigt; und
ein zweites Kennzeichen, das einen SPS-Ressourcentyp anzeigt, wobei der Ressourcentyp einen Uu-Schnittstellen-Ressourcentyp oder einen PC5-Schnittstellen-Ressourcentyp aufweist.

3. Verfahren nach Anspruch 1 oder 2, wobei die Informationen über die mindestens eine SPS-Konfiguration durch eine Funkressourcensteuerung, RRC, Signalisierungsnachricht übertragen werden.

4. Ressourcenzuweisungsverfahren, das aufweist:
Übertragen, durch eine Basisstation, von Informationen über mindestens eine semi-persistente Planungs-, SPS, Konfiguration an ein Endgerät;
Empfangen, durch die Basisstation, einer Ressourcenanforderung vom Endgerät gemäß einer Übertragung, die sich auf Vehicle-to-Everything, V2X, bezieht, wobei die Ressourcenanforderung ein erstes Kennzeichen, das eine SPS-Periode anzeigt, und ein zweites Kennzeichen enthält, das einen logischen Kanal anzeigt, der für SPS konfiguriert ist, der SPS-Ressourcen verwenden darf, die durch die Informationen über mindestens eine SPS-Konfiguration angezeigt werden; und
Übertragen, durch die Basisstation, von SPS-Ressourcenzuweisungsinformationen an das Endgerät als Reaktion auf die Ressourcenanforderung, wobei die SPS-Ressourcenzuweisungsinformationen ein Kennzeichen enthalten, das eine Aktivierung oder eine Freigabe einer der mindestens einen SPS-Konfiguration anzeigt.

5. Verfahren nach Anspruch 4, wobei die Informationen über die mindestens eine SPS-Konfiguration aufweisen:
einen Index, der eine SPS-Konfiguration identifiziert;
ein erstes Kennzeichen, das die SPS-Periode anzeigt; und
ein zweites Kennzeichen, das einen SPS-Ressourcentyp anzeigt, wobei der Ressourcentyp einen Uu-Schnittstellen-Ressourcentyp oder einen PC5-Schnittstellen-Ressourcentyp aufweist.

6. Verfahren nach Anspruch 4 oder 5, wobei die Informationen über die mindestens eine SPS-Konfiguration durch eine Funkressourcensteuerung, RRC, Signalisierungsnachricht übertragen werden.

7. Computerspeichermedium mit darauf gespeicherten computerausführbaren Befehlen, wobei die Befehle bei Ausführung durch einen Prozessor den Prozessor veranlassen, ein Verfahren zu implementieren, das aufweist
Empfangen, durch ein Endgerät, von Informationen über mindestens eine semi-persistente Planungs-, SPS, Konfiguration von einer Basisstation;
Senden, durch das Endgerät, einer Ressourcenanforderung an die Basisstation gemäß einer Übertragung, die sich auf Vehicle-to-Everything, V2X, bezieht, wobei die Ressourcenanforderung ein erstes Kennzeichen, das eine SPS-Periode anzeigt, und ein zweites Kennzeichen enthält, das einen für SPS konfigurierten logischen Kanal anzeigt, der SPS-Ressourcen verwenden darf, die durch die Informationen über mindestens eine SPS-Konfiguration angezeigt werden; und
Empfangen, durch das Endgerät, von SPS-Ressourcenzuweisungsinformationen von der Basisstation als Reaktion auf die Ressourcenanforderung, wobei die SPS-Ressourcenzuweisungsinformationen ein Kennzeichen enthalten, das eine Aktivierung oder eine Freigabe einer der mindestens einen SPS-Konfiguration anzeigt.

8. Computerspeichermedium nach Anspruch 7, wobei die Informationen über die mindestens eine SPS-Konfiguration aufweisen:
einen Index, der eine SPS-Konfiguration identifiziert;
ein erstes Kennzeichen, das die SPS-Periode anzeigt; und
ein zweites Kennzeichen, das einen SPS-Ressourcentyp anzeigt, wobei der Ressourcentyp einen Uu-Schnittstellen-Ressourcentyp oder einen PC5-Schnittstellen-Ressourcentyp aufweist.

9. Computerspeichermedium nach Anspruch 7 oder 8, wobei die Informationen über die mindestens eine SPS-Konfiguration durch eine Funkressourcensteuerung, RRC, Signalisierungsnachricht übertragen werden.

10. Drahtlose Kommunikationsvorrichtung, die aufweist:
einen Prozessor, und
einen Speicher, der ausführbare Befehle enthält, wobei die Befehle bei Ausführung durch den Prozessor den Prozessor veranlassen:
Informationen über mindestens eine semi-persistente Planungs-, SPS, Konfiguration von einer Basisstation zu empfangen;
eine Ressourcenanforderung an die Basisstation gemäß einer Übertragung zu übertragen, die sich auf Vehicle-to-Everything, V2X, bezieht, wobei die Ressourcenanforderung ein erstes Kennzeichen, das eine SPS-Periode anzeigt, und ein zweites Kennzeichen enthält, das einen für SPS konfigurierten logischen Kanal anzeigt, der SPS-Ressourcen verwenden darf, die durch die Informationen über mindestens eine SPS-Konfiguration angezeigt werden; und
SPS-Ressourcenzuweisungsinformationen von der Basisstation als Reaktion auf die Ressourcenanforderung zu empfangen, wobei die SPS-Ressourcenzuweisungsinformationen ein Kennzeichen enthalten, das eine Aktivierung oder eine Freigabe von einer der mindestens einen SPS-Konfiguration anzeigt.

11. Vorrichtung nach Anspruch 10, wobei die Informationen über die mindestens eine SPS-Konfiguration aufweisen:
einen Index, der eine SPS-Konfiguration identifiziert;
ein erstes Kennzeichen, das die SPS-Periode anzeigt; und
ein zweites Kennzeichen, das einen SPS-Ressourcentyp anzeigt, wobei der Ressourcentyp einen Uu-Schnittstellen-Ressourcentyp oder einen PC5-Schnittstellen-Ressourcentyp aufweist.

12. Vorrichtung nach Anspruch 10 oder 11, wobei die Informationen über die mindestens eine SPS-Konfiguration durch eine Funkressourcensteuerung, RRC, Signalisierungsnachricht übertragen werden.

13. Drahtlose Kommunikationsvorrichtung, die aufweist:
einen Prozessor, und
einen Speicher, der ausführbare Befehle enthält, wobei die Befehle bei Ausführung durch den Prozessor den Prozessor veranlassen,:
Informationen über mindestens eine semi-persistente Planungs-, SPS, Konfiguration an ein Endgerät zu übertragen;
eine Ressourcenanforderung von dem Endgerät gemäß einer Übertragung zu empfangen, die sich auf Vehicle-to-Everything, V2X, bezieht, wobei die Ressourcenanforderung ein erstes Kennzeichen, das eine SPS-Periode anzeigt, und ein zweites Kennzeichen enthält, das einen für SPS konfigurierten logischen Kanal anzeigt, der SPS-Ressourcen verwenden darf, die durch die Informationen über mindestens eine SPS-Konfiguration angezeigt werden; und
SPS-Ressourcenzuweisungsinformationen an das Endgerät als Reaktion auf die Ressourcenanforderung zu übertragen, wobei die SPS-Ressourcenzuweisungsinformationen ein Kennzeichen enthalten, das eine Aktivierung oder eine Freigabe einer der mindestens einen SPS-Konfiguration anzeigt.

14. Vorrichtung nach Anspruch 13, wobei die Informationen über die mindestens eine SPS-Konfiguration aufweisen:
einen Index, der eine SPS-Konfiguration identifiziert;
ein erstes Kennzeichen, das die SPS-Periode anzeigt; und
ein zweites Kennzeichen, das einen SPS-Ressourcentyp anzeigt, wobei der Ressourcentyp einen Uu-Schnittstellen-Ressourcentyp oder einen PC5-Schnittstellen-Ressourcentyp aufweist.

15. Vorrichtung nach Anspruch 13 oder 14, wobei die Informationen über die mindestens eine SPS-Konfiguration durch eine Funkressourcensteuerung, RRC, Signalisierungsnachricht übertragen werden.

## Revendications

1. Procédé de demande de ressources, comprenant :
la réception, par un terminal, d'informations sur au moins une configuration de planification semi-persistante, SPS, provenant d'une station de base ;
la transmission, par le terminal, d'une demande de ressources à la station de base conformément à une transmission relative à une communication véhicule à tout, V2X, où la demande de ressources comprend un premier identifiant indiquant une période SPS et un deuxième identifiant indiquant un canal logique configuré pour SPS et autorisé à utiliser les ressources SPS indiquées par les informations sur au moins une configuration SPS ; et
la réception, par le terminal, d'informations d'attribution de ressources SPS provenant de la station de base en réponse à la demande de ressources, lesdites informations d'attribution de ressources SPS comprenant un indicateur indiquant une activation ou une libération de l'une des au moins une configuration SPS.

2. Procédé selon la revendication 1, où les informations relatives à ladite au moins une configuration SPS comprennent :
un indice identifiant une configuration SPS ;
un premier indicateur indiquant la période SPS ; et
un deuxième indicateur indiquant un type de ressources SPS, le type de ressources comprenant un type de ressources d'interface Uu ou un type de ressources d'interface PC5.

3. Procédé selon la revendication 1 ou la revendication 2, où les informations sur ladite au moins une configuration SPS sont acheminées par un message de signalisation de commande de ressources radio, RRC.

4. Procédé d'attribution de ressources, comprenant :
la transmission à un terminal, par une station de base, d'informations sur au moins une configuration de planification semi-persistante, SPS ;
la réception, par la station de base, d'une demande de ressources provenant du terminal conformément à une transmission relative à une communication véhicule à tout, V2X, où la demande de ressources comprend un premier identifiant indiquant une période SPS et
un deuxième identifiant indiquant un canal logique configuré pour SPS et autorisé à utiliser les ressources SPS indiquées par les informations sur au moins une configuration SPS ; et
la transmission au terminal, par la station de base, d'informations d'attribution de ressources SPS en réponse à la demande de ressources, lesdites informations d'attribution de ressources SPS comprenant un indicateur indiquant une activation ou une libération de l'une des au moins une configuration SPS.

5. Procédé selon la revendication 4, où les informations sur ladite au moins une configuration SPS comprennent :
un indice identifiant une configuration SPS ;
un premier indicateur indiquant la période SPS ; et
un deuxième indicateur indiquant un type de ressources SPS, le type de ressources comprenant un type de ressources d'interface Uu ou un type de ressources d'interface PC5.

6. Procédé selon la revendication 4 ou la revendication 5, où les informations sur ladite au moins une configuration SPS sont acheminées par un message de signalisation de commande de ressources radio, RRC.

7. Support d'enregistrement informatique sur lequel sont stockées des instructions exécutables par ordinateur, l'exécution desdites instructions par un processeur entraînant ledit processeur à mettre en œuvre un procédé comprenant :
la réception, par un terminal, d'informations sur au moins une configuration de planification semi-persistante, SPS, provenant d'une station de base ;
la transmission, par le terminal, d'une demande de ressources à la station de base conformément à une transmission relative à une communication véhicule à tout, V2X, où la demande de ressources comprend un premier identifiant indiquant une période SPS et un deuxième identifiant indiquant un canal logique configuré pour SPS et autorisé à utiliser les ressources SPS indiquées par les informations sur au moins une configuration SPS ; et
la réception, par le terminal, d'informations d'attribution de ressources SPS provenant de la station de base en réponse à la demande de ressources, lesdites informations d'attribution de ressources SPS comprenant un indicateur indiquant une activation ou une libération de l'une des au moins une configuration SPS.

8. Support d'enregistrement informatique selon la revendication 7, où les informations sur ladite au moins une configuration SPS comprennent :
un indice identifiant une configuration SPS ;
un premier indicateur indiquant la période SPS ; et
un deuxième indicateur indiquant un type de ressources SPS, le type de ressources comprenant un type de ressources d'interface Uu ou un type de ressources d'interface PC5.

9. Support d'enregistrement informatique selon la revendication 7 ou la revendication 8, où les informations sur ladite au moins une configuration SPS sont acheminées par un message de signalisation de commande de ressources radio, RRC.

10. Dispositif de communication sans fil, comprenant :
un processeur, et
une mémoire comprenant des instructions exécutables, l'exécution desdites instructions par un processeur entraînant ledit processeur à :
recevoir des informations sur au moins une configuration de planification semi-persistante, SPS, provenant d'une station de base ;
transmettre une demande de ressources à la station de base conformément à une transmission relative à une communication véhicule à tout, V2X, où la demande de ressources comprend un premier identifiant indiquant une période SPS et un deuxième identifiant indiquant un canal logique configuré pour SPS et autorisé à utiliser les ressources SPS indiquées par les informations sur au moins une configuration SPS ; et
recevoir des informations d'attribution de ressources SPS de la station de base en réponse à la demande de ressources, lesdites informations d'attribution de ressources SPS comprenant un indicateur indiquant une activation ou une libération de l'une des au moins une configuration SPS.

11. Dispositif selon la revendication 10, où les informations sur ladite au moins une configuration SPS comprennent :
un indice identifiant une configuration SPS ;
un premier indicateur indiquant la période SPS ; et
un deuxième indicateur indiquant un type de ressources SPS, le type de ressources comprenant un type de ressources d'interface Uu ou un type de ressources d'interface PC5.

12. Dispositif selon la revendication 10 ou la revendication 11, où les informations sur ladite au moins une configuration SPS sont acheminées par un message de signalisation de commande de ressources radio, RRC.

13. Dispositif de communication sans fil, comprenant :
un processeur, et
une mémoire comprenant des instructions exécutables, l'exécution desdites instructions par un processeur entraînant ledit processeur à :
transmettre à un terminal des informations sur au moins une configuration de planification semi-persistante, SPS ;
recevoir du terminal une demande de ressources conformément à une transmission relative à une communication véhicule à tout, V2X, où la demande de ressources comprend un premier identifiant indiquant une période SPS et un deuxième identifiant indiquant un canal logique configuré pour SPS et autorisé à utiliser les ressources SPS indiquées par les informations sur au moins une configuration SPS ; et
transmettre au terminal des informations d'attribution de ressources SPS en réponse à la demande de ressources, lesdites informations d'attribution de ressources SPS comprenant un indicateur indiquant une activation ou une libération de l'une des au moins une configuration SPS.

14. Dispositif selon la revendication 13, où les informations sur ladite au moins une configuration SPS comprennent :
un indice identifiant une configuration SPS ;
un premier indicateur indiquant la période SPS ; et
un deuxième indicateur indiquant un type de ressources SPS, le type de ressources comprenant un type de ressources d'interface Uu ou un type de ressources d'interface PC5.

15. Dispositif selon la revendication 13 ou la revendication 14, où les informations sur ladite au moins une configuration SPS sont acheminées par un message de signalisation de commande de ressources radio, RRC.
